(19) Europäisches Patentamt
European Patent Office
Office européen des brevets

(11) EP 1 456 119 B1

(12) # EUROPÄISCHE PATENTSCHRIFT

(45) Veröffentlichungstag und Bekanntmachung des Hinweises auf die Patenterteilung:
**24.01.2007 Patentblatt 2007/04**

(21) Anmeldenummer: **02795008.8**

(22) Anmeldetag: **16.12.2002**

(51) Int Cl.:
***C01B 3/00*** *(2006.01)*

(86) Internationale Anmeldenummer:
**PCT/DE2002/004597**

(87) Internationale Veröffentlichungsnummer:
**WO 2003/051767 (26.06.2003 Gazette 2003/26)**

(54) **VERFAHREN UND VORRICHTUNG ZUR UMWANDLUNG EINES BRENNSTOFFES**

METHOD AND DEVICE FOR CONVERTING A FUEL

PROCEDE ET DISPOSITIF DE TRANSFORMATION D'UN COMBUSTIBLE

(84) Benannte Vertragsstaaten:
**AT BE BG CH CY CZ DE DK EE ES FI FR GB GR IE IT LI LU MC NL PT SE SI SK TR**

(30) Priorität: **18.12.2001 DE 10162245**

(43) Veröffentlichungstag der Anmeldung:
**15.09.2004 Patentblatt 2004/38**

(73) Patentinhaber: **SIEMENS AKTIENGESELLSCHAFT**
**80333 München (DE)**

(72) Erfinder:
- **HAMMER, Thomas**
**91334 Hemhofen (DE)**
- **KAPPES, Thomas**
**91056 Erlangen (DE)**
- **SCHIENE, Wolfgang**
**66280 Sulzbach (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 456 119 B1

Printed by Jouve, 75001 PARIS (FR)

**Beschreibung**

Die Erfindung bezieht sich auf ein Verfahren zur Umwandlung eines gasförmigen oder flüssigen, kohlenstoffhaltigen Brennstoffes gemäß dem Oberbegriff des Patentanspruches 1.

Unter Verwendung eines nichtthermischen Plasmas können bestimmte Reaktionswege innerhalb einer Gasmischung, die aus mindestens zwei Gasen bestehen können, initiiert werden. Damit eignet sich ein solches Verfahren insbesondere zur Umwandlung eines gasförmigen oder flüssigen kohlenstoffhaltigen Brennstoffs unter Zuführung eines gasförmigen oder flüssigen Oxidationsmittels. Das Oxidationsmittel ist beispielsweise Wasserdampf, Kohlendioxid, Sauerstoff oder Luft. Beim Einsatz eines flüssigen Brennstoffes bzw. eines flüssigen Oxidationsmittels müssen diese Stoffe z.B. in einem Verdampfer in die Gasphase überführt werden können.

Ziel der Umwandlung ist dabei insbesondere die Erzeugung von:

- Wasserstoff
- einer Mischung aus Wasserstoff und Kohlenmonoxid
- höheren Kohlenwasserstoffen
- Methanol.

Die Reformierung von gasförmigen Kohlenwasserstoffen wird heutzutage im großtechnischen Maßstab mittels konventionellen katalytischen Verfahren zur Erzeugung von Synthesegas, einem wichtigen Grundstoff für die chemische Industrie oder zur Gewinnung von Wasserstoff, angewandt. Bei diesem Prozess wird Erdgas, mit dem Hauptbestandteil Methan, zusammen mit Wasserdampf mit Hilfe eines Katalysators bei Temperaturen im Bereich von 850°C und erhöhten Drücken von ca. 20 bar in eine Mischung aus Kohlenmonoxid und Wasserstoff umgewandelt:

$$CH_4 + H_2O \rightleftarrows CO + 3H_2 \text{ ; } \Delta H^0 = 206 \text{ kJ} \qquad (1)$$

Der Wärmebedarf dieser stark endothermen Reaktion (1), welche als Dampfreformierung bezeichnet wird, muss durch eine externe Quelle z.B. dem Verbrennen eines Teil des Brennstoffs gedeckt werden. Die hohen Temperaturen und Drücke stellen hohe Anforderungen an die verwendeten Materialen.

Außerdem muss darauf geachtet werden, dass durch geeignete Prozessführung die Bildung von festem Kohlenstoff (Ruß), welche zur Deaktivierung des Katalysators führen würde, vermieden wird. Erdgas enthält typischerweise schwefelhaltigen Verunreinigungen, welche ebenfalls zur Deaktivierung des Katalysators führen können und deswegen vorher mittels geeigneter Vorrichtungen aus dem Brenngas entfernt werden müssen.

Neben dem Verfahren der Dampfreformierung sind gemäß den Gleichungen (2) und (3) die partielle Oxidation und die Pyrolyse bekannt:

$$C_nH_m + n/2\ O_2 \rightleftarrows n\ CO + m/2\ H_2 \qquad (2)$$

$$C_nH_m \rightleftarrows n\ C(s) + m/2\ H_2 \qquad (3)$$

Diese Prozesse werden vornehmlich bei schwer verdampfbaren oder stark verunreinigten Ausgangsstoffen verwendet.

Eine Kombination der Dampfreformierung und der partiellen Oxidation ist die sog. autotherme Reformierung gemäß Gleichung (4):

$$CH_4 + 0.445\ O_2 + 0.11\ H_2O \rightarrow CO + 2.11\ H_2;\ \Delta H^0_{T=350°C} = 0 \qquad (4)$$

Bei diesem Prozess werden die Anteile von Sauerstoff und Wasser so gewählt, dass der Wärmebedarf der endothermen Dampfreformierung durch die frei werdende Energie der partiellen Oxidation gedeckt wird. Für eine wirtschaftliche Durchführung dieses Verfahrens bei niedrigen Temperaturen ist ebenfalls der Einsatz eines Katalysators erforderlich. Wegen des Sauerstoffs im Eduktgas ist hierbei die Gefahr der Verkokung der Katalysatoren besonders hoch.

Bei der "on-board" Wasserstofferzeugung in Brennstoffzellenfahrzeugen verwendet man aufgrund der vorteilhafteren Eigenschaften häufig flüssiges Methanol als Ausgangsstoff. Dieses kann gemäß Gleichung (5) ähnlich dem Methan mittels katalytischer Dampfreformierung in Wasserstoff umgewandelt werden:

$$CH_3OH + H_2O \rightarrow CO_2 + 3H_2 \qquad (5)$$

Bei Verwendung von Methanol kann zwar die Reinheit des Ausgangsstoffes garantiert werden, so dass die Gefahr der Katalysatorvergiftung nicht gegeben ist. Allerdings ist es mit den derzeit verfügbaren Katalysatoren nicht

möglich, einen leichten, kompakten und damit kostengünstigen Reaktor aufzubauen. Außerdem ist ein Übergang auf andere flüssige Kraftstoffe mit höherer Energiedichte mit dieser katalytischen Technik nicht durchführbar.

Eine Alternative zur katalytischen Umwandlung bieten Verfahren bei denen zur Aufheizung des Gases thermische Lichtbögen verwendet werden. Hierbei werden durch stromstarke Gasentladungen Temperaturen oberhalb 2000°C erreicht. Diese hohen Gastemperaturen bewirken Umsatzraten und Reaktionszeiten, die den Einsatz von Katalysatoren verzichtbar machen. Jedoch stellen die im Lichtbogen auftretenden Bedingungen hohe Anforderungen an das verwendete Elektrodenmaterial um technisch interessante Standzeiten zu erreichen.

Im Gegensatz zu diesen thermischen Plasmaverfahren, bei denen alle im Gas vorhandenen Teilchen (Elektronen, Ionen, neutrale Gasmoleküle) die gleiche Energie bzw. Temperatur besitzen, stellt sich bei der Verwendung einer Koronaentladung, einer Funkenentladung oder einer dielektrisch behinderten Entladungen (≙ DBE, engl.: Dielectric Barrier Discharge ≙ DBD) durch deren transienten Charakter ein Ungleichgewicht zwischen einer sehr hohen mittleren Elektronenenergie von 1 bis 10 eV (1 eV entspricht einer Temperatur von 11600 K) und einer im Vergleich zur Ausgangstemperatur kaum erhöhten Neutralteilchentemperatur ein, womit eine selektive Anregung der Elektronenstoßreaktionen möglich ist. Man spricht in einem solchen Fall von einem nichtthermischen Plasma.

Koronaentladungen bilden sich in stark inhomogenen elektrischen Feldern aus. Nach Polarität der verwendeten Hochspannung spricht man von "positiver" oder "negativer" Koronaentladung. Im Bereich der hohen elektrischen Feldstärke (> 40 bis 50 kV/cm) bilden sich abhängig von den Entladungsparametern diffuse Leuchterscheinungen, Büschel- oder Streamerentladungen aus. Kennzeichnend für die Koronaentladung ist ein nahezu kontinuierlicher Stromfluss typischerweise im Bereich von μA bis mA.

Funkenentladungen sind transiente Entladungserscheinungen, die entstehen, wenn die Spannung zwischen zwei metallischen Elektroden soweit erhöht wird, dass die Durchbruchsfeldstärke überschritten wird. Der Entladungsspalt wird hierbei leitfähig. Begrenzt man nun die bei einer solchen Entladung fließende Ladung z.B. durch das Vorschalten eines RC-Gliedes, dann verlischt der Funken nach der vollständigen Entladung des Kondensators. Der über den Widerstand R fließende Strom lädt den Kondensator wieder auf und man erhält eine repetierende Entladungserscheinung. Die Charakteristik einer solchen Entladung liegt zwischen der einer nichtthermischen Koronaentladung und der eines thermischen Lichtbogens.

Bei der DBE wird ein vollständiger elektrischer Durchbruch der Entladungsstrecke durch eine zwischen den Elektroden angebrachte dielektrische Schicht verhindert. Der Strom wird in dieser Entladungsform von vielen einzelnen Mikroentladungen getragen, welche sich über die gesamte Fläche des Dielektrikums verteilen.

Typische Werte einer solchen Mikroentladung sind in Tabelle 1 aufgeführt. Vorteile dieser Entladung sind die Begrenzung des maximalen Entladungsstromes und die gleichmäßige Verteilung der Entladung über die gesamte Dielektrikumsfläche. Insbesondere die letztgenannte Eigenschaft ermöglicht die einfache Erzeugung ein- oder zweidimensional skalierter Entladungen.

Tabelle 1 : Typische Eigenschaften einer Mikroentladung

| | |
|---|---|
| Radius des Plasmakanals | ca. 100 μm |
| Lebensdauer | wenige ns |
| mittlere Elektronenenergie | 1 bis 10 eV |
| Elektronendichte | $10^{14}$ $cm^{-3}$ |

Industriell angewandt werden diese nichtthermischen Plasmaverfahren zur Ozonerzeugung. Anwendungen zum Abbau leichtflüchtiger organischer Verbindungen (VOC) und zur Abgasreinigung befinden sich in der Entwicklung.

Beim Stand der Technik wird hierbei immer die gesamte Gasmischung durch das nichtthermische Plasma behandelt.

Untersuchungen zur Dampfreformierung von Methan mittels DBE haben gezeigt, dass die Methankomponente des Eduktgases durch die Entladung bevorzugt aktiviert wird. Hierdurch kommt es vornehmlich zur Bildung von Wasserstoff und höheren Kohlenwasserstoffen, während oxidierte Komponenten wie z.B. Kohlenmonoxid (CO) nur in sehr geringen Mengen gebildet werden. Somit scheint eine effiziente Durchführung der Dampfreformierung von Methan auf diese Weise nicht möglich zu sein. Die Untersuchungen der durch nichtthermische Plasmen induzierten chemischen Kinetik bestätigen, dass dieses Problem prinzipieller Natur ist. Die initialen Reaktionen der Dampfreformierung von Methan sind die Dissoziation der Methan- bzw. Wassermoleküle durch Elektronenstoß:

| | |
|---|---|
| $CH_4 + e \rightarrow \cdot CH_3 + H\cdot + e$ | (6) |
| $H_2O + e \rightarrow \cdot OH + H\cdot + e$ | (7a) |
| $H_2O + e \rightarrow \cdot OH + H^-$ | (7b) |

An die Elektronenstoßreaktionen schließen sich zeitlich die Radikalreaktionen gemäß Tabelle 3 an:

*Tabelle* 3 : Radikalreaktionen bei der Wasserdampfreformierung von Methan

Radikal-Molekül-Reaktionen

| | |
|---|---|
| $CH_4 + OH \rightarrow H_2O + CH_3$ | (8) |
| $CH_4 + H\cdot \rightarrow H_2 + CH_3$ | (9) |
| $H_2O + CH_3 \rightarrow CH_4 + OH$ | (10) |
| $H_2O + H \rightarrow OH + H_2$ | (11) |

Radikal-Radikal-Reaktionen

| | |
|---|---|
| $\cdot CH_3 + \cdot CH_3 \rightarrow C_2H_6$ | (12) |
| $\cdot CH_3 + H \rightarrow CH_4$ | (13) |
| $\cdot OH + \cdot OH \rightarrow H_2O_2$ | (14) |
| $\cdot OH + \cdot OH \rightarrow H_2O + O\cdot$ | (15) |
| $\cdot OH + H \rightarrow H_2O$ | (16) |
| $\cdot H + \cdot H \rightarrow H_2$ | (17) |
| $\cdot CH_3 + \cdot OH \rightarrow H_2O + CH_2$ | (18) |
| $\cdot CH_3 + \cdot OH \rightarrow CH_3OH$ | (19) |

Die durch Dissoziation des Methans entstandenen $CH_3$-Radikale rekombinieren sehr schnell gemäß Reaktionsgleichung (12) in Richtung $C_2H_6$. Die H-Radikale reagieren entweder über die Reaktionsgleichung (9) unter Bildung eines Methyl-Radikals oder durch direkte Rekombination gemäß der Reaktionsgleichung (17) in Richtung $H_2$. Radikal-Reaktionen mit Wasser gemäß den Reaktionsgleichungen (10) und (11) sind insgesamt deutlich unwahrscheinlicher.

Die Reaktionsgeschwindigkeiten $RG_i$ und damit die erzielbaren Umsätze der Elektronenstoßreaktionen (6) bis (7b) und der Radikalreaktionen(8) bis (19) ergeben sich gemäß folgender Gleichung:

$$RG_i = k_i \cdot n_1 \cdot n_2 \qquad (21)$$

Hierin bedeutet $k_i$ eine von den beteiligten Reaktionspartner und den Reaktionsbedingungen wie z.B. der mittleren Elektronenenergie im Fall der Elektronenstoßreaktionen oder der Temperatur im Fall der Radikalreaktionen abhängige Größe. Die beiden Größen $n_1$ und $n_2$ geben die Konzentration der an der Reaktion beteiligten Spezies an.

Aus der WO 01/33056 A1 ist ein mit einem Plasma betriebener Brennstoffkonverter bekannt, bei dem einer

Anordnung aus zwei Elektroden und dazwischen vorhandenem Elektrodenspalt ein Brennstoff-Luft-Gemisch zugeführt wird und eine Spannung zwischen 100 V und 40 kV an die Elektroden angelegt wird. Dabei ist Sauerstoff im Überschuss vorhanden, insbesondere im Verhältnis von 1,2 bis 2,5 zum Kohlenstoffanteil. Es können mehrere Konverter hintereinander geschaltet werden.

Ausgehend von letzterem Stand der Technik ist es Aufgabe der Erfindung, ein verbessertes Verfahren zur Umwandlung eines gasförmigen oder flüssigen kohlenstoffhaltigen Brennstoffes anzugeben.

Die Aufgabe ist erfindungsgemäß durch die Maßnahmen des Patentanspruches 1 gelöst. Weiterbildungen des erfindungsgemäßen Verfahrens sind in den Unteransprüchen angegeben.

Gegenstand der Erfindung ist ein Verfahren, mit dem auf effiziente Weise selektiv bestimmte Radikale in einer Gasmischung erzeugt werden, um damit gezielt Reaktionsabläufe in der Gasmischung zu initiieren. Das erfindungsgemäße Verfahren arbeitet nach dem Prinzip, dass ein nichtthermisches Plasma in einem Bereich erzeugt wird, in denen die Dichten der im Plasma bevorzugt angeregten Gaskomponenten unterhalb derer liegen, die weniger bevorzugt angeregt werden. Bei den dabei verwendeten Vorrichtungen kann eine gezielte Einstellung der Konzentrationen einzelner Gaskomponenten innerhalb eines in der Vorrichtung erzeugten nichtthermischen Plasmas erreicht werden. Damit ist es möglich, gemäß Gleichung (21) die Reaktionsgeschwindigkeit für die Elektronenstoßreaktionen gezielt zu beeinflussen und so bestimmte Reaktionswege zu initiieren.

Generell kann dieses Verfahren überall dort sinnvoll eingesetzt werden, wo eine Gesamtbehandlung einer Gasmischung durch ein nicht-thermisches Plasma nicht zu den gewünschten Reaktionsabläufen führt. Vorteilhafterweise eignet sich das erfindungsgemäße Verfahren zur Behandlung eines Brennstoff/Oxidationsmittel-Gemisches bestehend aus

- einem kohlenstoffhaltigem Brenngas z.B. Methan, Propan, Butan, Methanol oder
- einer Mischung aus kohlenstoffhaltigen Brenngasen z.B. einer Propan-Butan-Mischung oder

und

- einem einzelnen oxidierenden Gas, z.B. Wasserdampf ($H_2O$ gasförmig), Kohlendioxid ($CO_2$), Sauerstoff ($O_2$), Luft,
- einer Mischung aus oxidierenden Gasen,
- einem einzelnen oxidierenden Gas oder einer Mischung aus oxidierenden Gasen unter Zugabe eines weiteren nichtoxidierenden Gases z.B. Stickstoff ($N_2$) oder Argon (Ar)

mit dem Ziel

- der Erzeugung von Wasserstoff
- der Erzeugung einer Mischung aus Kohlenmonoxid (CO) und Wasserstoff ($H_2$)
- der Anreicherung des Brenngases mit Wasserstoff
- der Modifizierung des C/H-Verhältnisses im Brenngas
- der Erzeugung von Methanol
- der Erzeugung höherer Kohlenwasserstoffen,

wobei auch Kombinationen dieser Einzelpunkte realisierbar sind.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen

Figur 1 eine prinzipielle Darstellung des erfindungsgemäßen Verfahrens,
Figur 2 den Einsatz einer Zwischenstufe zur Abtrennung von Produktkomponenten beim Verfahren gemäß Figur 1,
Figur 3 den Einsatz einer Zwischenstufe zur Abtrennung eines nicht umgesetzten Ausgangsstoffes mit Rückführung beim Verfahren gemäß Figur 1,
Figur 4 den prinzipiellen Aufbau einer Anlage zur Dampfreformierung eines Brenngases nach dem Verfahren gemäß Figur 1,
Figur 5 den Aufbau einer Behandlungsstufe zur Erzeugung einer Korona- oder einer Funkenentladung,
Figur 6 eine Behandlungsstufe gemäß Figur 5 mit einer vierfachen Elektroden-Düsenanordnung,
Figur 7 die relative Einbaulage von Elektrode und Injektionsdüse bei einer Anordnung gemäß Figur 5 und 8,
Figur 8 den Aufbau einer Behandlungsstufe zur Erzeugung einer dielektrisch behinderten Entladung und
Figur 9 eine Behandlungsstufe entsprechend Figur 8 mit linienförmiger Zuführung des Oxidationsmittels.

Nachfolgend wird ein Verfahren zur selektiven Erzeugung reaktiver Teilchen und dessen separative Realisierung anhand von Aufbauten für die Dampfreformierung von Methan stellvertretend für gasförmige kohlenstoffhaltige

Brennstoffe oder flüssige kohlenstoffhaltige Brennstoffe, aus denen durch vorheriges Verdampfen ein Brenngasstrom erzeugt wurde, beschrieben.

Hierbei stellt das Methan die Gaskomponente dar, die im Vergleich zum Wasserdampf in einem nichtthermischen Plasma bevorzugt aktiviert wird. Diese bevorzugt aktivierte Gaskomponente wird im folgenden als primäre Gaskomponente bezeichnet.

Der Wasserdampf steht hierbei stellvertretend für ein Oxidationsmittel. Als Alternativen bieten sich Kohlendioxid ($CO_2$), reiner Sauerstoff ($O_2$) oder eine Mischung aus diesen Stoffen gegebenenfalls auch unter Zugabe eines nichtoxidierend wirkenden Gases wie z.B. Stickstoff ($N_2$) oder Argon (Ar) an. Diese durch das nichtthermischen Plasma weniger leicht aktivierbare Komponente wird im folgenden als sekundäre Gaskomponente bezeichnet.

Das Verfahrensprinzip der selektiven Radikalerzeugung lässt sich folgendermaßen verwirklichen, wobei insbesondere auf die Figuren 1 bis 3 Bezug genommen wird. In den Schemadarstellungen kennzeichnet 10, 10', ... einen primären Gasstrom, dem im einzelnen Stufen, beispielsweise Stufe 1 und Stufe 2, ein sekundärer Gasstrom 20, 20', ... zugeführt wird. Verallgemeinert gilt: Der aus beliebigen Stufen austretende Gasstrom $10^{n'}$ bildet jeweils den primären Gasstrom $(10+1)^{n'}$ der nachfolgenden Stufe n+1. In den hier beschriebenen Ausführungsbeispielen ist der primäre Gasstrom 10, 10', ... z.B. Methan, der sekundäre Gasstrom 20, 20', ... z.B. Wasserdampf.

Gemäß Figur 1 wird dem primären Gasstrom 10 bzw. 10' in den Behandlungsstufen 1 bzw. 2 nacheinander jeweils ein Teil 20 bzw. 20' des Wasserdampfes als sekundärer Gasstrom zugeführt. Die aus der Stufe 1 austretende Gasmischung stellt den primären Gasstrom der nachfolgenden Behandlungsstufe 2 dar. Ein nichtthermisches Plasma wird nun jeweils innerhalb der Behandlungsstufen 1 bzw. 2 im Mischbereich 15 bzw. 15' der beiden Gasströme 11 und 20 bzw. 11' und 20' derart erzeugt, dass innerhalb der Plasmazone der Wasserdampf in deutlich überstöchiometrischem Molverhältnis vorliegt. Für Methan ($CH_4$) als Brennstoff und Wasser ($H_2O$) als Oxidationsmittel, bei denen das stöchiometrische Molverhältnis 1:1 ist, ist ein Faktor von 3 bis 10, vorzugsweise 5, möglich. Für andere Brennstoff/Oxidationsmittel-Gemische lassen sich entsprechende hohe Werte mit $n_{Oxidationsmittel} >> n_{Brennstoff}$ erreichen, die jeweils deutlich über dem Molverhältnis im jeweiligen Gesamtprozess liegen. Dies wird z.B. dadurch erreicht, dass die Plasmazone nur einen kleinen Teil des Reaktorvolumens und des Strömungsquerschnittes einnimmt und lediglich ein Teil 11, 11',... des primären Gasstroms 10, 10', ... durch die Plasmazonen 15, 15, ... geleitet wird. Gleichermaßen kann durch das Einleiten des sekundären Gasstroms 20, 20', ... in die Plasmazonen 15, 15, ... der primäre Gasstrom 10, 10', ... aus diesem Bereich teilweise verdrängt wird und als Parallelstrom 12, 12', ... unbehandelt an den Plasmazonen 15 bzw. 15' vorbeiströmen.

Bei dem so definierten Verfahren wird die spezifische Plasmaleistung innerhalb einer einzelnen Stufe so gewählt, dass die Komponenten im sekundären Gasstrom nahezu vollständig umgesetzt werden.

Eine vorteilhafte Ergänzung des Verfahrens besteht darin, jeweils hinter einer Behandlungsstufe 30 bestimmte Anteile aus dem Gasstrom abzutrennen. Gemäß Figur 2 kann es sich dabei durch Verwendung einer Separationsstufe 25 um eine Produktkomponente und gemäß Figur 3 durch Verwendung einer Separationsstufe 35 mit der Möglichkeit einer Rückführung um eine nicht vollständig umgesetzte Eduktkomponente handeln. Unter Produktkomponente ist dabei eine in der Behandlungsstufe gebildete Komponenten, unter Eduktkomponente ein nicht umgesetzter Anteil des primären oder sekundären Gasstroms definiert.

Bei der Dampfreformierung von Methan bietet es sich an, den Wasserstoff z.B. mittels einer selektiv durchlässigen Membran abzutrennen, um eine Oxidation des Wasserstoffs in den nachfolgenden Stufen zu verhindern. Die Abtrennung von nicht umgesetzten Eduktkomponenten, z.B. des Wasser mittels Kondensation, ist dann sinnvoll, wenn man eine Rückführung dieser Komponenten in den Umwandlungsprozess vorsieht. Kombinationen beider Trennverfahren sind ebenfalls denkbar.

Die Separationsstufen 25 und 35 können darüber hinaus einen Wärmetauscher enthalten, in dem der aus der Gasbehandlungsstufe austretende Gasstrom abgekühlt wird. Die so gewonnene Wärme kann anschließend dem Prozess wieder zugeführt werden.

In Figur 4 bedeuten 41 eine Dosiereinrichtung z.B. ein Ventil für Brenngas, 42 einen Wärmetauscher mit einer Einheit 42a zum Aufheizen, 43 eine Dosiereinrichtung z.B. ein Ventil für Wasser und 44 einen Wärmetauscher für Wasser mit einer Einheit 44a zur Verdampfung von Wasser und einer Einheit 44b zur Überhitzung des erzeugten Wasserdampfes. Einer Gasbehandlungsstufe 45 ist eine Dosiereinheit 46 und eine Energiequelle 47 zugeordnet. Es folgt eine Einheit 48a zur Nachbehandlung des Reaktionsgases. Die Nachbehandlungseinheit 48a ist Teil eines Wärmetauschers 48.

Im Einzelnen wird der Gasbehandlungsstufe 45 über zwei getrennte Leitungen das Brenngas und der Wasserdampf zugeführt. Der Brenngasstrom wird vor der ersten Stufe durch den Wärmetauscher 42 geleitet und auf die gewünschte Temperatur gebracht. Der Wärmetauscher 42 kann dabei entweder durch das Verbrennen eines Teil des Brenngases z.B. in einem katalytischen Brenner, oder aber direkt elektrisch geheizt werden.

Flüssige Brennstoffe werden zusätzlich verdampft. Das Wasser wird zunächst im Verdampfer 44a in die Gasphase überführt und anschließend mittels des Überhitzers 44b auf die gewünschte Temperatur gebracht. Verdampfer 44a und Überhitzer 44b können dabei kombiniert in einer Einheit 44 untergebracht sein. Der erzeugte Wasserdampf kann dann in der gewünschten Menge den einzelnen Gasbehandlungsstufen mittels der Dosiereinheit 46, z.B. einem

Nadelventil oder einem Massenflussregler, zugeführt werden.

Um Energieverluste und Kondensation zu vermeiden, ist die gesamte Anlage thermisch isoliert aufgebaut. Es sind Mittel zur Wärmerückgewinnung vorhanden, was durch die Pfeile 141 und 142 angedeutet ist. Insbesondere wenn die Nachbehandlungsstufe 48a Teil des Wärmetauscher 48 ist, kann die freiwerdende Wärme in die Wärmetauscher 42 und 44 zurückgeführt werden. Beiden Wärmetauschern wird entsprechend den Pfeilen 143 und 144 zusätzlich Wärme von externen Energiequellen zugeführt.

In jeder Gasbehandlungsstufe 45 wird mittels einer Koronaentladung, einer Funkenentladung oder einer dielektrisch behinderten Entladung eine Zone 45a mit einem nicht-thermischen Plasma erzeugt, durch welche ein Teil des Brenngasstroms und der jeweils injizierte Wasserdampfstrom geleitet werden. Zur Erzeugung des Plasmas sind geeignete Elektrodenanordnungen erforderlich, was anhand der Figuren 5 bis 9 beschrieben wird. Aus Figur 4 ist ersichtlich, dass die Plasmazone nur in einem Teil des Reaktorquerschnittes gezündet wird. Somit kann ein Teil des primären Gasstromes an der Plasmazone 45a vorbeiströmen.

Insbesondere bei Verwendung einer punktförmigen Injektion des Oxidationsmittels können mehrere Elektroden in eine einzelne Gasbehandlungsstufe integriert werden, um damit höhere Umsätzen pro Gasbehandlungsstufe zu erzielen. Beispielsweise kann die Injektion des Oxidationsmittels über eine gemeinsame Zuleitung erfolgen, welche mit entsprechenden Öffnungen für die punktförmige Einleitung des Oxidationsmittels versehen ist.

Figur 5 zeigt die konkrete Realisierung einer Gasbehandlungsstufe unter Verwendung von metallischen Elektroden zur Erzeugung einer Korona- oder einer Funkenentladungen mit punktförmiger Injektion des Oxidationsmittels. Die Einheit besteht im Wesentlichen aus einem metallischen Rohr 51, durch welches der Brenngasstrom geleitet wird. In das Rohr 51 ragen eine angespitzte Elektrode 52, die mittels einer Hülse 53 isoliert zum restlichen System 51 eingebaut ist, sowie die metallische Injektionsdüse 57 zum Einbringen des Wasserdampfes hinein.

Die gesamte Einheit einschließlich Injektionsdüse ist geerdet. Zur Erzeugung des nichtthermischen Plasmas im Reaktionsraum 55 wird die Elektrode 52 mit einer nicht in Figur 5 dargestellten Hochspannungsquelle verbunden, welche entweder eine Gleichspannung, eine Wechselspannung oder gepulste Spannungssignale liefert.

Typische Spannungswerte liegen zwischen 1kV bis 20kV bei Elektroden-Injektionsdüsen-Abständen im Bereich von 1mm bis 1cm. Im Fall einer Koronaentladung, die sich durch eine hochohmige Versorgung kontrolliert erreichen lässt, fließen dann Ströme im Bereich 1 $\mu$A bis ca. 100 $\mu$A, so dass pro Elektrodenspitze Leistungen im Bereich von 1 mW bis zu wenigen Watt möglich sind.

Bei Verwendung höherer Spannungen kommt es zu einem funkenartigen Durchbruch der Entladungsstrecke. Insbesondere bei Verwendung einer Gleichspannungsquelle muss dann der maximal fließende Strom sowie die Menge der pro Durchbruch übertragene Ladung durch ein geeignetes Vorschaltgerät begrenzt werden. Im einfachsten Fall kann es sich hierbei um ein RC-Glied handeln. Der Widerstand begrenzt den maximalen Strom, während der Kondensator die Menge der pro Entladung übertragenen Ladung festlegt. Damit kann sowohl die Wiederholrate als auch die Energie pro Entladung und damit die mittlere Leistung eingestellt werden. Die maximal mögliche Leistung ist im Wesentlichen nur durch die Leistung der verwendeten Energiequelle und das verwendete Elektrodenmaterial beschränkt und sollte im Hinblick auf eine effiziente Energienutzung zwischen 1 bis 10 Watt pro Elektrodenspitze liegen.

Ein Beispiel für den Aufbau einer Mehrfachinjektion innerhalb einer Gasbehandlungsstufe zeigt Figur 6 am Beispiel einer Vorrichtung zur Erzeugung einer Korona- oder Funkenentladung.

Einzelne Elektroden 62a bis 62d mit Isolierungen 63a bis 63d können dabei entweder von unterschiedlichen Energiequellen oder von einer einzelnen Energiequelle angesteuert werden. Im letztgenannten Fall ist durch den Einbau entsprechender Vorschaltgeräte dafür Sorge zu tragen, dass die Entladungsleistung entsprechend auf die einzelnen Elektroden verteilt wird.

Gemäß den Figuren 7a bis 7c kann die Elektrodenkonfiguration mittels der Parameter Einbautiefe $h_1$, der Elektrode 72, Einbautiefe $h_2$ der Injektionsdüse 77, der Entladungsspaltlänge $h_3$, dem axialen Abstand $h_4$ zwischen Elektrode und Injektionsdüse sowie dem Winkel $\alpha$ zwischen der Elektrodenachse und der Fließrichtung des Brenngasstrom so an die Strömungsverhältnisse angepasst werden, dass sich in der Plasmazone das gewünschte Molverhältnis von Oxidationsmittel zu Brenngas, bzw. deren Konzentrationsverhältnis mit $n_{Wasser}>>n_{Brenngas}$, einstellt.

Letzteres wird dadurch erreicht, dass - wie bereits bei Figur 4 herausgestellt - lediglich ein Teil des Brenngasstroms durch die Plasmazone 45a geleitet wird oder aber dass das Brenngases durch das Einleiten des Wasserdampfes aus der Plasmazone 45a herausgedrängt wird und dadurch unbehandelt an der Plasmazone 45a dieser Behandlungsstufe vorbeiströmt.

Unter Umständen kann es sinnvoll sein zusätzliche Ablenkeinrichtungen 75 für den Brenngasstrom vor der Elektrode und/oder der Injektionsdüse anzubringen, um die durch die Plasmazone strömende Brenngasmenge zu verringern (siehe Abbildung 7d). Die Optimierung des Systems in Abhängigkeit von den verwendeten Gasmengen und den Fließgeschwindigkeiten erfolgt nach den bekannten Verfahren der Strömungsmechanik.

Figur 8 zeigt die Realisierung einer Gasbehandlungsstufe zur Erzeugung einer dielektrisch behinderten Entladung mit punktförmiger Injektion des Oxidationsmittels. Die in den Brenngasstrom hineinragende Elektrode 82 ist von einer dielektrischen Schicht 83 umgeben, welche vorzugsweise aus einem keramischen Material mit hoher Dielektrizi-

tätskonstante wie z.B. $Al_2O_3$, $TiO_2$, ... besteht. Um einen definierten Ansatzpunkt für die Entladung zu erhalten, empfiehlt sich hierbei die Verwendung einer spitzen Injektionsdüse 86. Wird an die Hochspannungselektrode eine AC-Hochspannung hoher Frequenz im kHz-Bereich oder eine gepulste Hochspannung angelegt, so entsteht im Bereich 85 zwischen Elektrodenspitze 82 und Injektionsdüse 86 eine dielektrisch behinderte Entladung, gebildet durch eine Vielzahl einzelner Mikroentladungen, die sich über die gesamte Spitze der Elektrode verteilen. Bei Verwendung von Elektroden-Injektionsdüsen-Abständen im mm-Bereich liegen die benötigten Spannungswerte im Bereich von 1 kV bis 30 kV. Vorteil dieser Mikroentladungen im Vergleich zur Funkenentladung ist der nichtthermische Charakter dieser Entladungsform.

In Figur 9 wird das Brenngas senkrecht oder in einem spitzen Winkel zur Elektrodenachse einer stabförmig ausgebildeten Elektrode 92 , die mit einer keramischen Schicht 93 versehen ist, eingeleitet. Entsprechend ist die Injektionsdüse als Spalt 96 ausgebildet. Der Abstand zwischen beschichteter Elektrode 92 und dem Injektionsspalt 96 kann in Abhängigkeit von den jeweiligen Gasmengen und den Fließgeschwindigkeiten so gewählt werden, dass sich das gewünschte Verhältnis von Brenngas und Oxidationsmittel einstellt.

## Patentansprüche

**1.** Verfahren zur Umwandlung eines gasförmigen oder flüssigen, kohlenstoffhaltigen Brennstoffes, wobei der Brennstoff mit einem Oxidationsmittel reagiert mit folgenden Verfahrensschritten:

- aus dem kohlenstoffhaltigem Brennstoff wird ein primärer Gasstrom erzeugt,
- diesem primären Gasstrom wird in wenigstens zwei Behandlungsstufen jeweils ein Teil des Oxidationsmittels in Form eines sekundären Gasstroms zugeführt,
- in demjenigen Mischbereich der beiden Gasströme, in dem das Molverhältnis zwischen Oxidationsmittel und Brennstoff wesentlich größer als das Molverhältnis im Gesamtprozess ist, wird ein nicht-thermisches Plasma zur Generierung reaktiver Teilchen aus dem Oxidationsmittel erzeugt.

**2.** Verfahren nach Anspruch 1, **dadurch gekennzeichnet, dass** Wasserdampf ($H_2O$ gasförmig) als Oxidationsmittel dient.

**3.** Verfahren nach Anspruch 1, **dadurch gekennzeichnet, dass** Sauerstoff ($O_2$) als Oxidationsmittel dient.

**4.** Verfahren nach Anspruch 1, **dadurch gekennzeichnet, dass** Kohlendioxid ($CO_2$) als Oxidationsmittel dient.

**5.** Verfahren nach Anspruch 1, **dadurch gekennzeichnet, dass** eine Mischung aus oxidierenden Gasen als Oxidationsmittel dient.

**6.** Verfahren nach Anspruch 1, **dadurch gekennzeichnet, dass** dem Oxidationsmittel eine nicht-oxidierende Gaskomponente zugegeben wird.

**7.** Verfahren nach Anspruch 6, **dadurch gekennzeichnet, dass** die zugegebene Gaskomponente Stickstoff ($N_2$) ist.

**8.** Verfahren nach Anspruch 6, **dadurch gekennzeichnet, dass** die zugegebene Gaskomponente ein Edelgas ist.

**9.** Verfahren nach Anspruch 1, **dadurch gekennzeichnet, dass** der sekundäre Gasstrom aus Luft, Verbrennungsabgas oder einer Mischung aus beidem besteht.

**10.** Verfahren nach Anspruch 1, **dadurch gekennzeichnet, dass** Produktkomponenten, welche innerhalb einer Behandlungsstufe gebildet wurden, aus dem Gasstrom abgetrennt werden.

**11.** Verfahren nach Anspruch 1, **dadurch gekennzeichnet, dass** eine Ausgangskomponente des primären oder des sekundären Gasstroms, welche nach Durchströmen der Behandlungsstufe nicht umgesetzt wird aus dem Gasstrom abgetrennt und ggf. zurückgeführt wird.

**12.** Verfahren nach Anspruch 1, **dadurch gekennzeichnet, dass** das nichtthermische Plasma mittels einer elektrischen Gasentladung erzeugt wird.

**13.** Verfahren nach Anspruch 12, **dadurch gekennzeichnet, dass** die elektrische Gasentladung eine Koronaentladung, eine Funkenentladung oder eine dielektrische behinderte Entladung ist.

**14.** Verfahren nach einem der vorhergehenden Ansprüche, **dadurch gekennzeichnet, dass** es in einer Vorrichtung durchgeführt wird, die folgende Merkmale hat:

- es sind mindestens zwei Behandlungsstufen (45) vorhanden, in denen dem Brenngasstrom als primärem Gasstrom ein sekundärer Gasstrom mit dem Oxidationsmittel zuführbar und in denen ein nicht-thermisches Plasma zur selektiven Generierung von reaktiven Teilchen aus dem Oxidationmittel im Mischbereich beider Gasströme erzeugbar ist,
- jede Behandlungsstufe enthält eine Energiequelle (47) zur Anregung des nicht-thermischen Plasmas,
- pro Behandlungsstufe (45) ist eine Dosiereinheit (46) vorhanden, mit der ein bestimmter Teil des Oxidationsmittels in die Behandlungsstufe (45) geleitet und dort als sekundärer Gasstrom mit dem Brenngasstrom als primärem Gasstrom vermischt wird.

**15.** Verfahren nach Anspruch 14, **dadurch gekennzeichnet, dass** im Fall eines gasförmigen Brennstoffes eine Einrichtung zur Aufheizung (42) oder im Fall eines verdampfbaren flüssigen Brennstoffes eine Einrichtung zur kombinierten Verdampfung und Überhitzung verwendet wird.

**16.** Verfahren nach Anspruch 14 oder Anspruch 15, **dadurch gekennzeichnet, dass** im Fall eines gasförmigen Oxidationsmittels eine Einrichtung zur Aufheizung (44) oder im Fall eines verdampfbaren flüssigen Oxidationsmittel, z.B. Wasser, eine Einrichtung (44a, 44b) zur kombinierten Verdampfung und Überhitzung verwendet wird.

**17.** Verfahren nach Anspruch 15, **dadurch gekennzeichnet, dass** die Einrichtungen (42, 44) zur Aufheizung bzw. zur kombinierten Aufheizung und Überhitzung des primären bzw. des sekundären Gasstroms in Verbindung von Wärmetauschern verwendet werden, welche durch die Restwärme des Produktgases oder durch Verbrennen eines Teil des Brenngases geheizt werden.

**18.** Verfahren nach Anspruch 14, **dadurch gekennzeichnet, dass** eine Gasbehandlungsstufe (45) mit einer Einrichtung in Form einer Injektionsdüse (57, 86) bzw. eines Injektionsspaltes (95) zur punktförmigen bzw. linienförmigen Injektion des sekundären Gasstrom in den primären Gasstrom verwendet wird. (Fig.5 bis Fig.9)

**19.** Verfahren nach Anspruch 18, **dadurch gekennzeichnet, dass** die Gasbehandlungsstufe (45) an mehreren Stellen die Möglichkeit bietet, eine Zone eines nichtthermischen Plasmas zu erzeugen und in diesem Bereich dem primären Gasstrom das Oxidationsmittel als sekundären Gasstrom punktförmig oder linienförmig zuzuführen.

**20.** Verfahren nach Anspruch 16 und 18, **dadurch gekennzeichnet, dass** eine Energiequelle (47) zur Erzeugung einer Koronaentladung oder einer Funkenentladung zwischen einer in die Gasbehandlungsstufe(54) hinragenden metallischen Elektrode (52, 62) und einer metallischen Injektionsdüse (57, 67) bzw. einem metallischen Injektionsspalt (96) verwendet wird. (Fig.5, Fig.6)

**21.** Verfahren nach Anspruch 16 und 18, **dadurch gekennzeichnet, dass** eine Energiequelle (47) zur Erzeugung einer dielektrisch behinderte Entladung zwischen einer in die Gasbehandlungsstufe (45) hinragenden Elektrode (82, 92) und der Injektionsdüse (86) bzw. dem Injektionsspalt (96) verwendet wird, wozu die Elektrode (82, 92) mit einer dielektrischen Beschichtung bzw. Ummantelung (83, 93) versehen wird. (Fig. 8, Fig.9)

**22.** Verfahren nach Anspruch 20 und 21, **dadurch gekennzeichnet, dass** die Injektionsdüse (86) bzw. der Injektionsspalt (96) und die jeweils zugehörige Elektrode (82, 92) hinsichtlich ihres Abstandes, ihrer Orientierung zueinander und ihrer relativen Lage zur Flussrichtung des primären Gasstroms beliebig einbaubar und/oder veränderbar sind.

**23.** Verfahren nach Anspruch 22, **dadurch gekennzeichnet, dass** eine Ablenkeinheit (75) im Bereich vor der Injektionsdüse (86) bzw. dem Injektionsspalt (96) verwendet wird, welche dazu dient einen Teil des Brenngases an dem Bereich zwischen Elektrode (82, 92) und Injektionsdüse (86) bzw. dem Injektionsspalt (96) vorbeizuleiten. (Fig. 7d)

## Claims

**1.** Method for converting a gaseous or liquid carbon-based fuel wherein the fuel reacts with an oxidant, having the following method steps:

- a primary gas stream is generated from the carbon-based fuel,

- a part of the oxidant is respectively fed in the form of a secondary gas stream to the primary gas stream in at least two treatment stages,
- in the mixing region of the two gas streams where the molar ratio between oxidant and fuel is substantially greater than the molar ratio in the overall process, a nonthermal plasma is generated for generating reactive particles from the oxidant.

2. Method according to Claim 1, **characterized in that** steam (gaseous $H_2O$) is employed as the oxidant.

3. Method according to Claim 1, **characterized in that** oxygen ($O_2$) is employed as the oxidant.

4. Method according to Claim 1, **characterized in that** carbon dioxide ($CO_2$) is employed as the oxidant.

5. Method according to Claim 1, **characterized in that** a mixture of oxidizing gases is employed as the oxidant.

6. Method according to Claim 1, **characterized in that** a non-oxidizing gas component is added to the oxidant.

7. Method according to Claim 6, **characterized in that** the added gas component is nitrogen ($N_2$).

8. Method according to Claim 6, **characterized in that** the added gas component is a noble gas.

9. Method according to Claim 1, **characterized in that** the secondary gas stream consists of air, combustion exhaust gas or a mixture of both.

10. Method according to Claim 1, **characterized in that** product components which are formed within a treatment stage are separated from the gas stream.

11. Method according to Claim 1, **characterized in that** a starting component of the primary or secondary gas stream, which is not converted after the flowing through the treatment stage, is separated from the gas stream and optionally recycled.

12. Method according to Claim 1, **characterized in that** the nonthermal plasma is generated by means of an electrical gas discharge.

13. Method according to Claim 12, **characterized in that** the electrical gas discharge is a corona discharge, a spark discharge or a dielectric barrier discharge.

14. Method according to one of the preceding claims, **characterized in that** it is carried out in a device which has the following features:

    - at least two treatment stages (45) are provided, in which a secondary gas stream with the oxidant can be fed to the combustible gas stream as a primary gas stream, and in which a nonthermal plasma can be generated in the mixing region of the two gas streams for selectively generating reactive particles from the oxidant,
    - each treatment stage contains an energy source (47) for exciting the nonthermal plasma,
    - one dosing unit (46) per treatment stage (45) is provided, with which a particular part of the oxidant can be delivered into the treatment stage (45) and mixed there as a secondary gas stream with the combustible gas stream as a primary gas stream.

15. Method according to Claim 14, **characterized in that** a heating instrument (42) is used in the case of a gaseous fuel, or an instrument for combined evaporation and superheating is used in the case of an evaporable liquid fuel.

16. Method according to Claim 14 or 15, **characterized in that** a heating instrument (44) is used in the case of a gaseous fuel, or an instrument (44a, 44b) for combined evaporation and superheating is used in the case of an evaporable liquid fuel, for example water.

17. Method according to Claim 15, **characterized in that** the instruments (42, 44) for heating or combined heating and superheating of the primary or secondary gas stream, respectively, are used in conjunction with heat exchangers which are heated by the residual heat of the product gas or by burning a part of the combustible gas.

**18.** Method according to Claim 14, **characterized in that** a gas treatment stage (45) is used with an instrument in the form of an injection nozzle (57, 86) or an injection gap (95) for pointwise or linear injection of the secondary gas stream into the primary gas stream, respectively. (Fig. 5 to Fig. 9)

**19.** Method according to Claim 18, **characterized in that** the gas treatment stage (45) provides the opportunity to generate a nonthermal plasma zone at a plurality of positions and to feed the oxidant as a secondary gas stream pointwise or linearly to the primary gas stream in this region.

**20.** Method according to Claims 16 and 18, **characterized in that** an energy source (47) is used for generating a corona discharge or a spark discharge between a metallic electrode (52, 62) projecting into the gas treatment stage (54) and a metallic injection nozzle (57, 67) or a metallic injection gap (96). (Fig. 5, Fig. 6)

**21.** Method according to Claims 16 and 18, **characterized in that** an energy source (47) is used for generating a dielectric barrier discharge between an electrode (82, 92) projecting into the gas treatment stage (45) and the injection nozzle (86) or the injection gap (96), to which end the electrode (82, 92) is provided with a dielectric coating or encapsulation (83, 93). (Fig. 8, Fig. 9)

**22.** Method according to Claims 20 and 21, **characterized in that** the injection nozzle (86) or the injection gap (96) and the respectively associated electrode (82, 92) are arbitrarily installable and/or variable in respect of their spacing, their mutual orientation and their position relative to the flow direction of the primary gas stream.

**23.** Method according to Claim 22, **characterized in that** a deflection unit (75) is used in the region upstream of the injection nozzle (86) or the injection gap (96), which is employed to send a part of the combustible gas past the region between the electrode (82, 92) and the injection nozzle (86), or the injection gap (96). (Fig. 7d)

**Revendications**

**1.** Procédé de transformation d'un combustible carbonacé gazeux ou liquide, le combustible réagissant sur un agent oxydant, comprenant des stades de procédé suivants:

- on produit un courant gazeux primaire à partir du combustible carbonacé,
- on envoie à ce courant gazeux primaire, dans au moins deux stades de traitement, respectivement une partie de l'agent oxydant sous la forme d'un courant gazeux secondaire,
- on produit dans la zone de mélange des deux courants gazeux, où le rapport molaire entre l'agent oxydant et le combustible est sensiblement plus grand que le rapport molaire dans le processus global, un plasma non thermique pour la production de particules réactives à partir de l'agent oxydant.

**2.** Procédé suivant la revendication 1, **caractérisé en ce que** de la vapeur d'eau ($H_2O$ sous forme de gaz) sert d'agent oxydant.

**3.** Procédé suivant la revendication 1, **caractérisé en ce que** de l'oxygène ($O_2$) sert d'agent oxydant.

**4.** Procédé suivant la revendication 1, **caractérisé en ce que** du dioxyde de carbone ($CO_2$) sert d'agent oxydant.

**5.** Procédé suivant la revendication 1, **caractérisé en ce qu'**un mélange de gaz oxydants sert d'agent oxydant.

**6.** Procédé suivant la revendication 1, **caractérisé en ce que** l'on ajoute à l'agent oxydant un constituant gazeux qui n'est pas oxydant.

**7.** Procédé suivant la revendication 6, **caractérisé en ce que** le constituant gazeux ajouté est de l'azote ($N_2$).

**8.** Procédé suivant la revendication 6, **caractérisé en ce que** le constituant gazeux ajouté est un gaz rare.

**9.** Procédé suivant la revendication 1, **caractérisé en ce que** le courant gazeux secondaire est constitué d'air, de gaz d'échappement de combustion ou d'un mélange des deux.

**10.** Procédé suivant la revendication 1, **caractérisé en ce que** l'on sépare du courant gazeux des constituants produits

qui ont été formés dans un stade de traitement.

**11.** Procédé suivant la revendication 1, **caractérisé en ce que** l'on sépare du courant gazeux et, le cas échéant, on l'y retourne, un constituant de départ du courant gazeux primaire ou du courant gazeux secondaire qui n'a pas réagi après être passé dans le stade de traitement.

**12.** Procédé suivant la revendication 1, **caractérisé en ce que** l'on produit le plasma non thermique au moyen d'une décharge électrique dans un gaz.

**13.** Procédé suivant la revendication 12, **caractérisé en ce que** la décharge électrique dans un gaz est une décharge par effet couronne, une décharge par étincelle ou une décharge rendue incomplète par voie diélectrique.

**14.** Procédé suivant l'une des revendications précédentes, **caractérisé en ce qu'**il est effectué dans un dispositif qui a des caractéristiques suivantes :

- il y a au moins deux étages (45) de traitement, dans lesquels il peut être apporté au courant de gaz combustible servant de courant gazeux primaire un courant gazeux secondaire ayant l'agent oxydant et dans lesquels il peut être produit un plasma non thermique pour engendrer sélectivement des particules réactives à partir de l'agent oxydant dans la zone de mélange des deux courants gazeux,
- chaque étage de traitement comporte une source (47) d'énergie d'excitation du plasma non thermique,
- il y a par étage (45) de traitement une unité (46) de dosage par laquelle une certaine partie de l'agent oxydant est envoyée dans l'étage (45) de traitement et y est mélangée en tant que courant gazeux secondaire au courant de combustible gazeux servant de courant gazeux primaire.

**15.** Procédé suivant la revendication 14, **caractérisé en ce que** dans le cas d'un combustible gazeux, il est utilisé un dispositif de chauffage (42) ou dans le cas d'un combustible liquide pouvant s'évaporer, un combustible d'évaporation et de surchauffe combinée.

**16.** Procédé suivant la revendication 14 ou la revendication 15, **caractérisé en ce que** dans le cas d'un agent oxydant gazeux, il est utilisé un dispositif de chauffe (44) ou dans le cas d'un agent oxydant liquide pouvant s'évaporer, par exemple de l'eau, un dispositif (44a, 44b) d'évaporation et de surchauffe combinée.

**17.** Procédé suivant la revendication 15, **caractérisé en ce que** les dispositifs (42, 44) de chauffage ou de chauffage à surchauffe combinée, du courant gazeux primaire ou du courant gazeux secondaire sont utilisés en liaison avec des échangeurs de chaleur qui sont chauffés par la chaleur résiduelle du gaz produit ou par combustion d'une partie du combustible gazeux.

**18.** Procédé suivant la revendication 14, **caractérisé en ce qu'**il est utilisé un étage (45) de traitement du gaz ayant un dispositif sous la forme d'une buse (57, 86) d'injection ou d'une fente (95) d'injection pour l'injection ponctuelle ou linéaire du courant gazeux secondaire dans le courant gazeux primaire (figure 5 à figure 9).

**19.** Procédé suivant la revendication 18, **caractérisé en ce que** l'étage (45) de traitement du gaz offre en plusieurs endroits la possibilité de produire une zone d'un plasma non thermique et dans cette zone d'envoyer sous forme ponctuelle ou linéaire au courant gazeux primaire l'agent oxydant en tant que courant gazeux secondaire.

**20.** Procédé suivant la revendication 16 et 18, **caractérisé en ce qu'**il est utilisé une source (47) d'énergie de production d'une décharge à effet couronne ou une décharge par étincelle entre une électrode (52, 62) métallique pénétrant dans l'étage (54) de traitement de gaz et une buse (57, 67) d'injection métallique ou une fente (96) d'injection métallique (figure 5, figure 6).

**21.** Procédé suivant la revendication 16 et 18, **caractérisé en ce qu'**il est utilisé une source (47) d'énergie de production d'une décharge rendue incomplète par voie diélectrique entre une électrode (82, 92) pénétrant dans l'étage (45) de traitement de gaz et la buse (86) d'injection ou la fente (96) d'injection, l'électrode (82, 92) étant munie à cet effet d'un revêtement ou d'une gaine (83, 93) diélectrique (figure 8, figure 9).

**22.** Procédé suivant la revendication 20 et 21, **caractérisé en ce que** la buse (86) d'injection ou la fente (96) d'injection et les électrodes (82, 92) associées, respectivement, peuvent, du point de vue de leur distance, de leur orientation mutuelle et de leur position relative par rapport à la direction du flux du courant gazeux primaire, être montées et/ou

être modifiées à volonté.

**23.** Procédé suivant la revendication 22, **caractérisé en ce qu'**il est utilisé une unité (75) de déviation dans la zone en amont de la buse (86) d'injection ou de la fente (96) d'injection, unité qui sert à faire passer une partie du gaz combustible devant la région comprise entre les électrodes (82, 92) et la buse (86) d'injection ou devant la fente (96) d'injection (figure 7d).

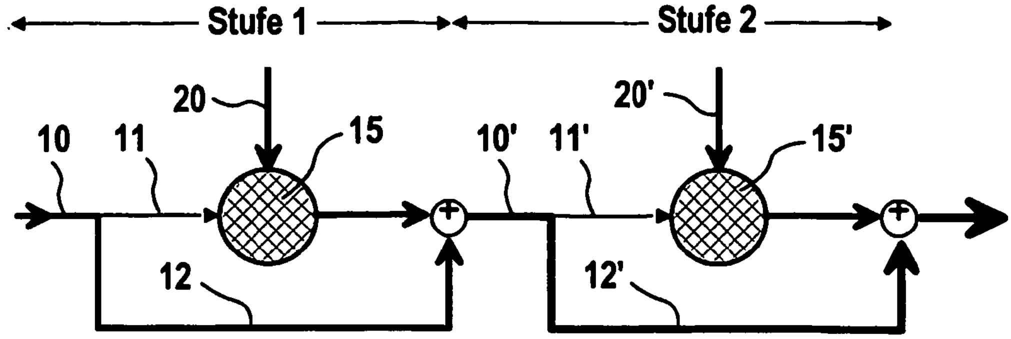


FIG 1

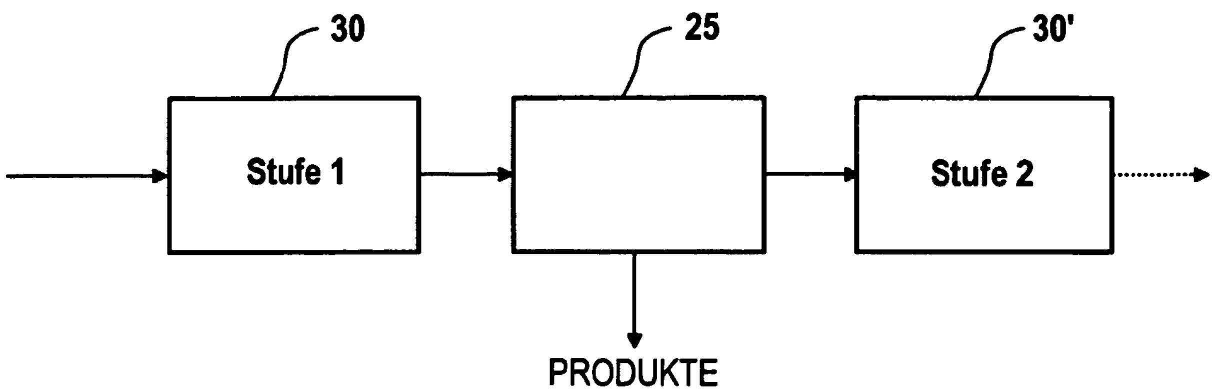


FIG 2

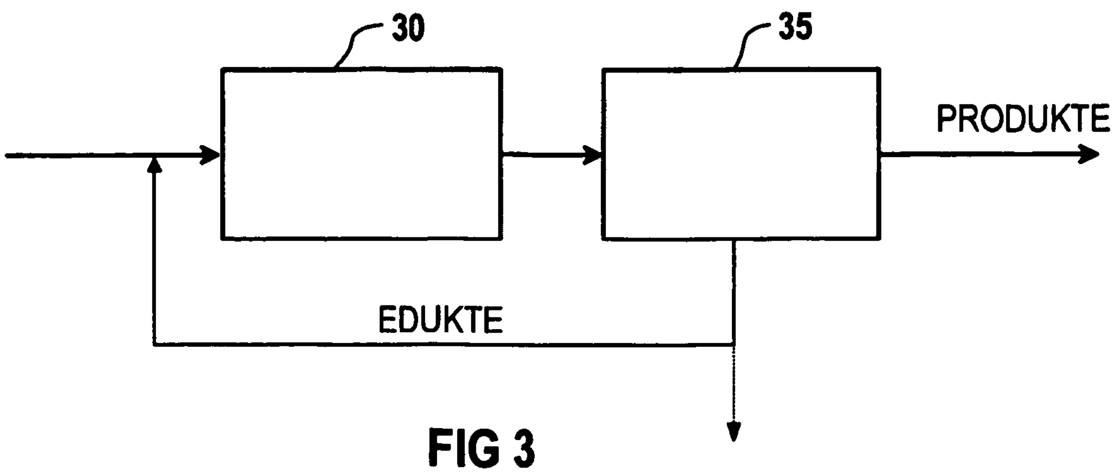


FIG 3

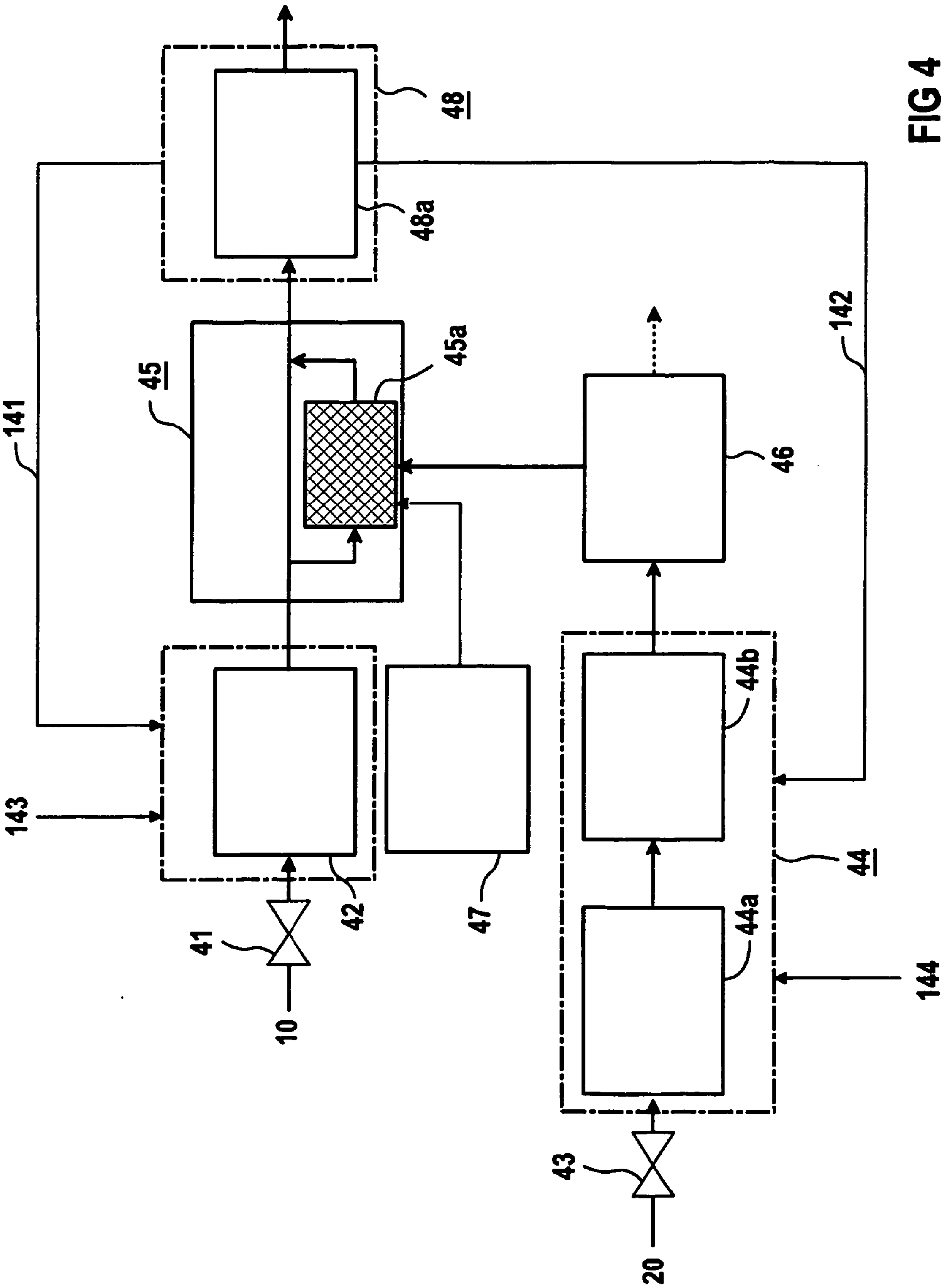


FIG 4

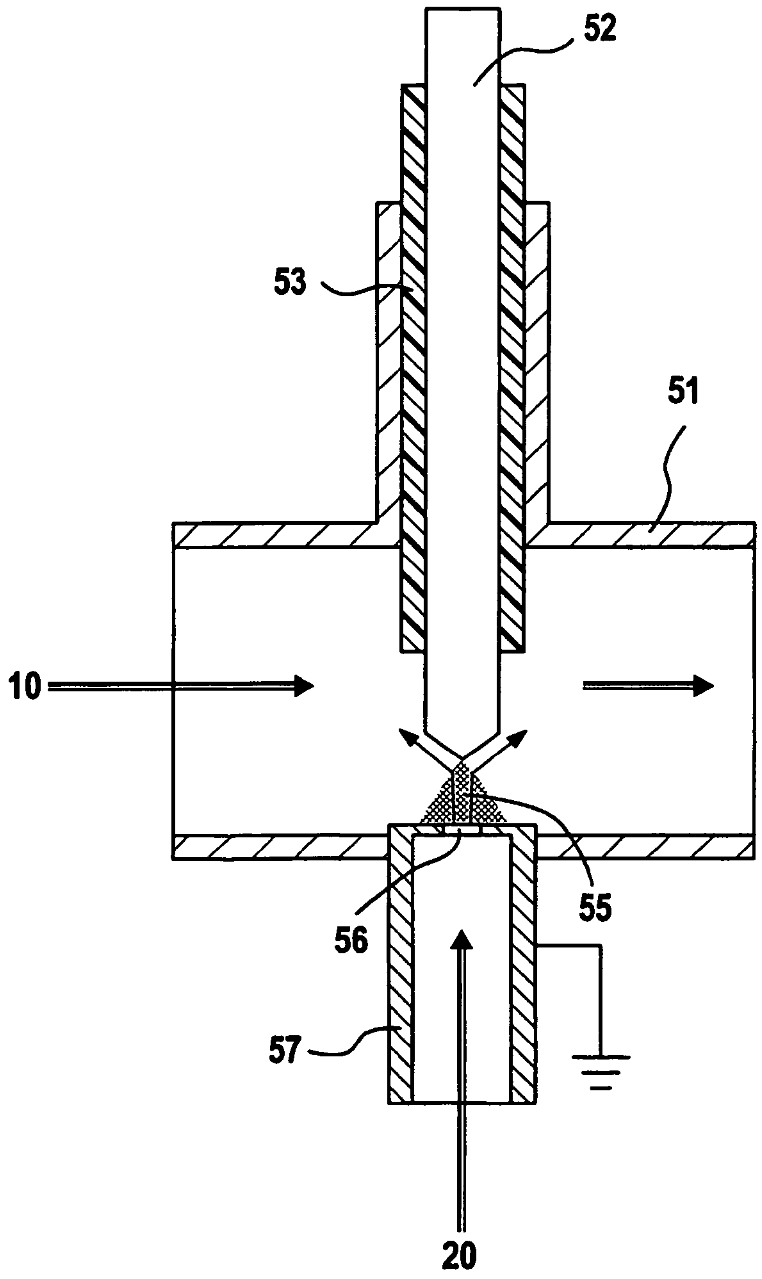


FIG 5

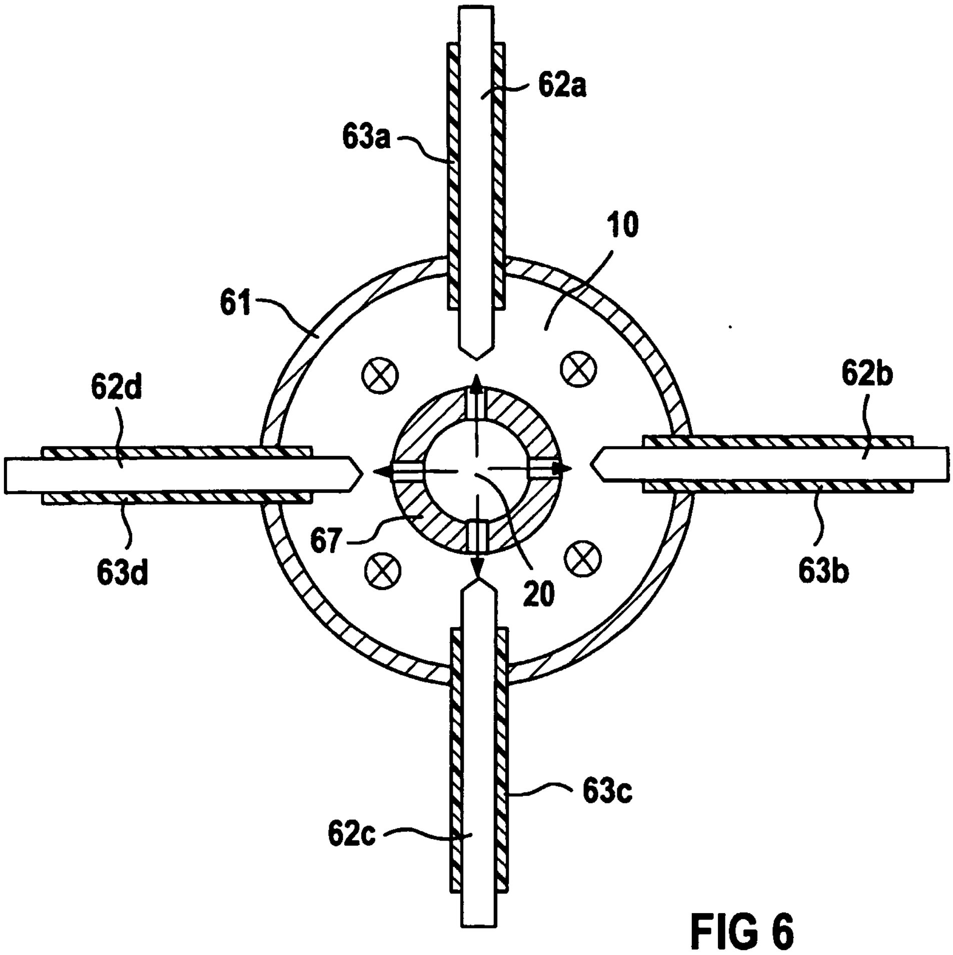
62a
63a
10
61
62d
62b
67
63d
20
63b
63c
62c

FIG 6

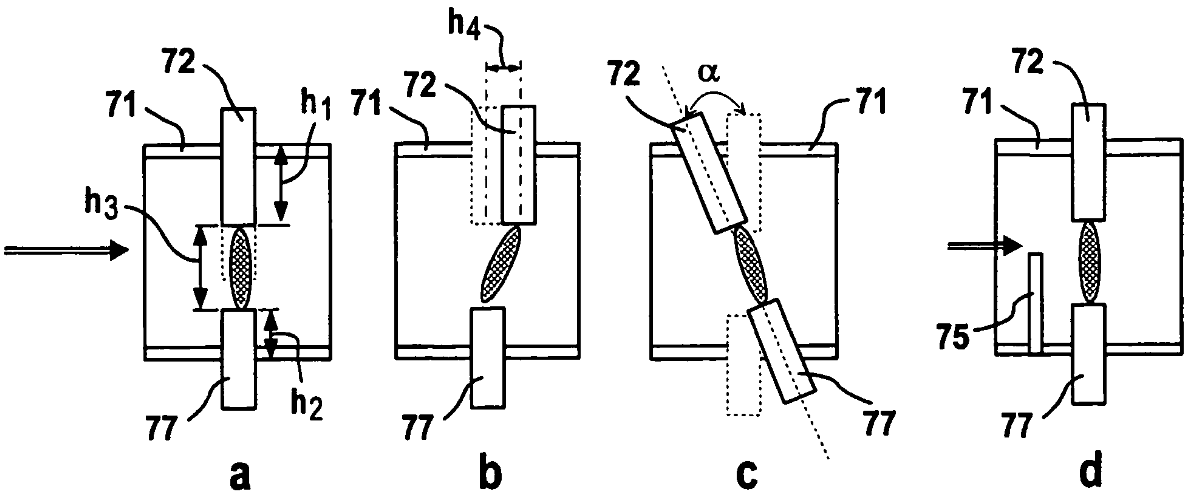
h4
72
71
h1
h3
75
77
h2
α
a
b
c
d

FIG 7

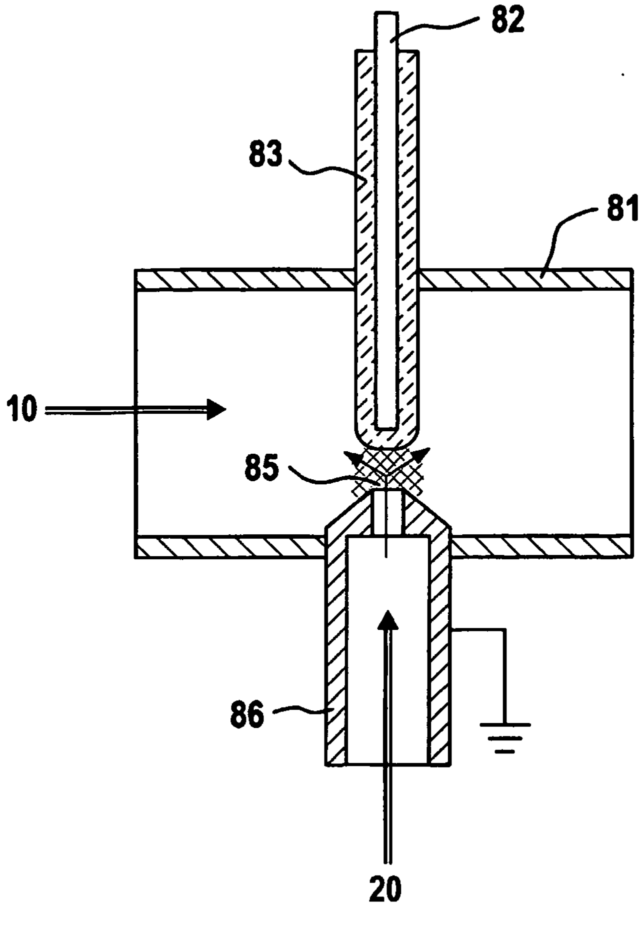


FIG 8

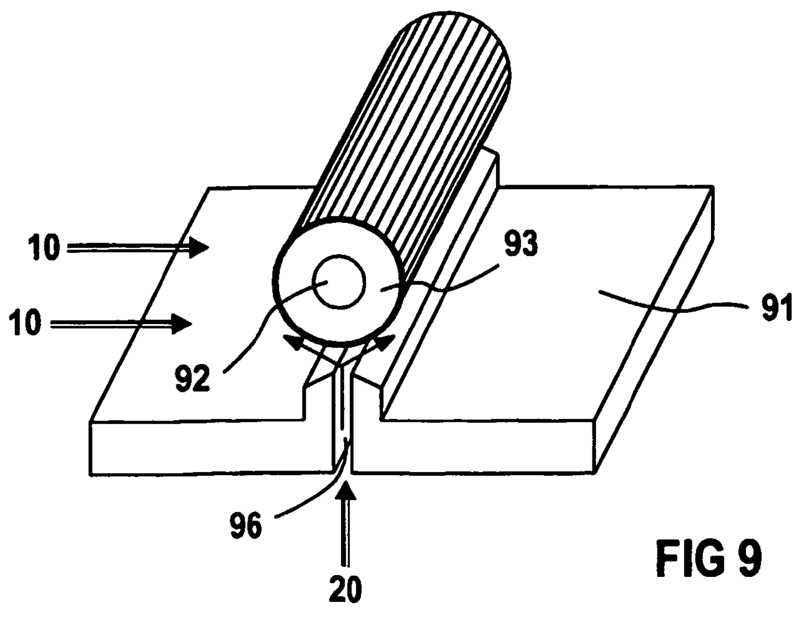


FIG 9